# FASCICULE DE BREVET EUROPEEN

(11) **EP 3 828 026 B1**
(45) Date de publication et mention de la délivrance du brevet: **13.09.2023**
(21) Numéro de dépôt: 20209468.6
(22) Date de dépôt: 24.11.2020
(51) Int. Cl.: B60N 2/005, B60N 2/07, B60N 2/08, B60N 2/24, B61D 33/00, B64D 11/06, B60N 2/015

(54) **DISPOSITIF DE FIXATION DE SIÈGE DE VÉHICULE**
BEFESTIGUNGSVORRICHTUNG FÜR FAHRZEUGSITZ
DEVICE FOR ATTACHING A VEHICLE SEAT

(30) Priorité: 26.11.2019 FR 1913229
(43) Date de publication de la demande: 02.06.2021
(73) Titulaire: SpeedInnov, 75008 Paris (FR)
(72) Inventeur: MANDERSCHEID, Thierry, 17000 LA ROCHELLE (FR); BEAUSEIGNEUR, Christophe, 17540 VERINES (FR); BENIZEAU, Fabrice, 17220 LA JARRIE (FR)
(74) Mandataire: Lavoix

(56) Documents cités:
- EP-A2- 1 304 254
- US-B1- 6 299 230
- US-B2- 9 975 454

## Description

La présente invention concerne un dispositif de fixation d'un siège de véhicule à un plancher de ce véhicule.

L'invention est particulièrement adaptée à un véhicule ferroviaire, mais pourrait être utilisée pour tout type de véhicule, notamment un véhicule de transport public (bus, véhicule marin, avion) ou tout véhicule dont les sièges sont fixés à un plancher (voiture...).

Dans un véhicule ferroviaire, les sièges équipant une salle de passagers peuvent habituellement être agencés selon deux configurations, à savoir une configuration de première classe (dans laquelle les sièges sont relativement larges et espacés les uns des autres) et une configuration de deuxième classe (dans laquelle les sièges sont plus étroits et rapprochés).

Pour des raisons de standardisation, les salles de passagers ont une structure identique pour les configurations de première classe ou de seconde classe. Les positions des sièges de première classe différent des positions des sièges de seconde classe, mais les moyens de fixation des sièges au plancher doivent être les mêmes pour les deux configurations.

A cet effet, on connait déjà, dans l'état de la technique, un dispositif de fixation de siège comportant un rail fixé au plancher du véhicule. Il est alors possible de fixer les sièges à différentes positions possibles sur le rail, permettant de moduler l'écartement entre les sièges en fonction de la configuration souhaitée.

Un tel rail présente toutefois divers inconvénients. Par exemple, il est nécessaire d'ajouter un élément de masquage du rail, recouvrant ce rail. Or, un tel élément de masquage dépasse généralement du niveau du plancher, et peut ainsi être une source d'inconfort pour les passagers, réduire l'esthétisme du plancher, et/ou gêner le passage de dispositifs d'entretien (tels que des aspirateurs).

Un autre dispositif de fixation de sièges est par exemple décrit dans US 9 975 454.

L'invention a notamment pour but de remédier aux inconvénients précités, en fournissant un dispositif de fixation de sièges ne comportant pas de rail au sol, sans réduire la modularité de la fixation.

A cet effet, l'invention a notamment pour objet un dispositif de fixation de siège selon la revendication 1.

Grâce à l'organe de fixation longitudinal, il reste possible de disposer le siège à une position souhaitée dans un intervalle continu autour de l'insert. L'invention permet donc une grande modularité dans le positionnement du siège, sans nécessiter de rail sur le plancher, mais uniquement au moins un insert ponctuel par siège.

Un dispositif de fixation selon l'invention peut en outre comporter l'une ou plusieurs des caractéristiques suivantes, prises seules ou selon toutes combinaisons techniquement envisageables.
- L'organe longitudinal de fixation comporte un rail s'étendant dans la direction longitudinale, et au moins un élément mobile le long du rail, chaque élément mobile comportant l'un respectif parmi l'au moins un orifice de passage.
- L'organe longitudinal de fixation est formé par un pied du montant de siège, ledit pied étant destiné à s'étendre parallèlement au sol, et le rail est formé par au moins une rainure s'étendant dans la direction longitudinale, ménagée sur ledit pied.
- Le dispositif de fixation comporte une ouverture oblongue de passage, s'étendant parallèlement au rail, l'orifice de passage de chaque élément mobile étant agencé en regard de l'ouverture oblongue de passage, de sorte que chaque élément de fixation passe à la fois par l'orifice de passage correspondant et par l'ouverture oblongue de passage.
- Le rail comporte deux rainures parallèles entre elles, l'élément mobile présentant une section transversale en forme générale de U, comprenant deux branche coopérant chacune avec l'une respective des rainures, et une partie centrale comprenant l'orifice de passage.
- Le rail est ménagé dans le montant de siège, l'organe longitudinal de fixation comportant une première partie de guidage coopérant avec le rail et mobile le long de ce rail, et une seconde partie de fixation solidaire de la première partie de guidage et comprenant l'au moins un orifice de passage, le dispositif de verrouillage comportant de préférence des moyens de verrouillage de la première partie de guidage dans une position longitudinale choisie le long du rail.
- L'organe longitudinal de fixation comporte une première partie solidarisée au montant de siège, et une seconde partie comprenant l'au moins un orifice de passage, la seconde partie étant susceptible d'être assemblée à la première partie en plusieurs positions possibles, chaque orifice de passage présentant de préférence une forme oblongue allongée dans la direction longitudinale.
- La première partie comporte un premier bord crénelé, et la seconde partie comporte un second bord crénelé complémentaire du premier bord crénelé, assemblable avec ce premier bord crénelé dans une pluralité de positions possibles dans la direction longitudinale.

L'invention concerne également un siège de véhicule, notamment de véhicule ferroviaire, comportant un montant destiné à être fixé à un plancher du véhicule, caractérisé en ce que le montant est muni d'un dispositif de fixation tel que défini précédemment.

L'invention concerne également un véhicule, notamment un véhicule ferroviaire, comportant un plancher, caractérisé en ce que le plancher comporte au moins un insert, le véhicule comportant au moins un siège tel que défini ci-dessus, fixé au plancher au moyen de l'insert.

Divers aspects et avantages de l'invention seront mis en lumière à la lecture de la description qui va suivre, donnée uniquement à titre d'exemple et faite en se référant aux figures annexées, parmi lesquelles :
[Fig 1] La figure 1 est une vue schématique en perspective d'un siège de véhicule fixé au moyen d'un dispositif de fixation selon l'invention.
[Fig 2] La figure 2 est une vue en perspective d'un dispositif de fixation du siège de la figure 1, selon un premier exemple de mode de réalisation de l'invention.
[Fig 3] La figure 3 est une vue en perspective d'un dispositif de fixation du siège de la figure 1, selon un deuxième exemple de mode de réalisation de l'invention.
[Fig 4] La figure 4 est une vue en perspective d'un dispositif de fixation du siège de la figure 1, selon un troisième exemple de mode de réalisation de l'invention.

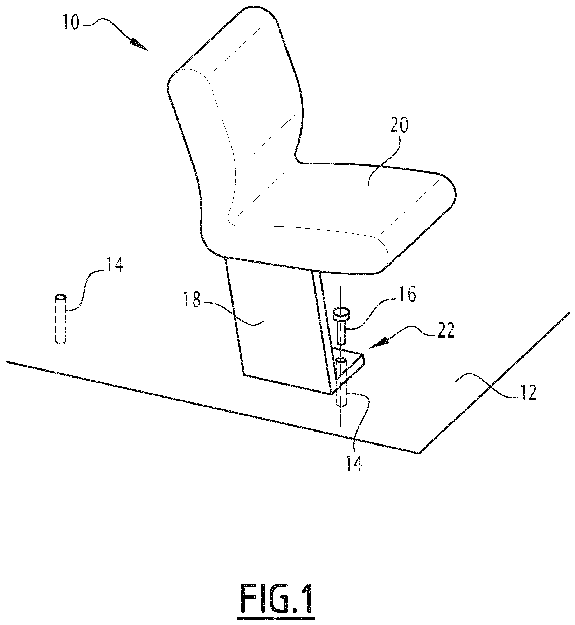

On a représenté, sur la figure 1, un siège 10 pour un véhicule, destiné à être fixé à un plancher 12 de ce véhicule.

Le véhicule est par exemple un véhicule ferroviaire, mais il pourrait en variante être tout type de véhicule dont les sièges sont fixés au plancher, notamment tout type de véhicule de transport public (bus, avion, véhicule marin, etc.) ou de véhicule privé (voiture, camion, etc.).

Le plancher 12 comporte au moins un insert ponctuel 14, et de préférence une pluralité d'inserts ponctuels 14 alignés dans une direction longitudinale X. Chaque insert 14 est par exemple formé par un cylindre creux, de préférence un cylindre creux dont l'intérieur est fileté.

Chaque insert 14 est susceptible de recevoir un élément de fixation 16 complémentaire, par exemple une vis, un boulon, un rivet ou tout autre élément de fixation adapté.

Le siège 10 comporte au moins un montant 18, s'étendant dans une direction comportant une composante verticale, depuis le plancher 12, et portant au moins un élément d'assise 20.

On notera que, dans certains cas, le siège 10 peut être un siège à double éléments d'assise 20, les éléments d'assise 20 étant solidarisés l'un à l'autre, l'un à côté de l'autre. Un tel siège à double éléments d'assise comporte généralement deux montants 18. Toutefois, un seul montant 18 sera décrit ci-après, l'autre montant étant similaire.

La présente invention concerne plus particulièrement un dispositif 22 de fixation du siège sur le plancher 12. Ce dispositif de fixation 22 est généralement porté par le montant 18.

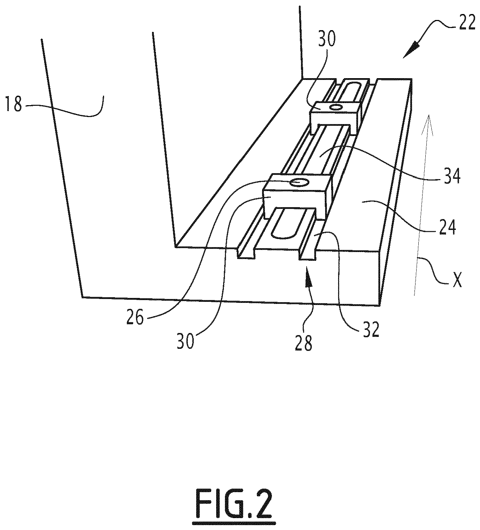

Un dispositif de fixation 22 selon un premier exemple de mode de réalisation est représenté sur la figure 2.

Le dispositif de fixation 22 comporte un organe longitudinal de fixation 24, solidaire du montant 18, par exemple fixé à ce montant 18 ou, dans l'exemple décrit conformément à ce premier mode de réalisation, venu de matière avec ce montant 18.

L'organe longitudinal de fixation 24 s'étend dans une direction longitudinale X, qui est généralement la direction dans laquelle le véhicule s'étend en longueur.

L'organe longitudinal de fixation 24 comporte au moins un orifice de passage 26 destiné à être traversé par l'un respectif des éléments de fixation 16.

Conformément à l'invention, l'organe longitudinal de fixation 24 est conformé pour recevoir l'élément de fixation 16 en une pluralité de positions possibles dans la direction longitudinale X par rapport au montant 18 du siège, la pluralité de positions possibles formant un segment continu s'étendant dans la direction longitudinale X. Ainsi, il est possible d'agencer le montant 18 du siège dans toutes positions souhaitées par rapport à l'insert 14, dans la limite dudit segment continu. Il suffit de disposer le montant 18 du siège dans la position souhaitée, et faire coïncider l'orifice de passage 26 avec l'insert 14 pour permettre la fixation.

Conformément au premier mode de réalisation, l'organe longitudinal de fixation 24 comporte un rail 28 s'étendant dans la direction longitudinale X, et au moins un élément 30 mobile le long du rail, chaque élément mobile 30 comportant l'un respectif parmi l'au moins un orifice de passage 26.

Avantageusement, le rail 28 est formé par au moins une rainure 32, de préférence deux rainures 32 parallèles entre elles. Dans ce cas, comme cela est représenté sur la figure 2, chaque élément mobile 30 présente une section transversale en forme générale de U, comprenant deux branche coopérant chacune avec l'une respective des rainures 32, et une partie centrale comprenant l'orifice de passage 26.

On notera que, dans ce premier mode de réalisation, l'organe longitudinal de fixation 24 est formé par un pied du montant 18, ce pied s'étendant parallèlement au plancher 12, de sorte que chaque orifice de passage 26 peut être disposé en regard de l'un des inserts 14 correspondant.

Avantageusement, cet organe longitudinal de fixation 24 comporte une ouverture oblongue de passage 34, s'étendant parallèlement au rail 28, l'orifice de passage 26 de chaque élément mobile 30 étant agencé en regard de l'ouverture oblongue de passage 34. Ainsi, chaque élément de fixation 16 peut passer à la fois par l'orifice de passage 26 correspondant et par l'ouverture oblongue de passage 34 pour atteindre l'insert 14 correspondant. On notera que le rail 28 présente une longueur sensiblement égale à celle de l'ouverture oblongue 34 dans la direction longitudinale, ou est légèrement plus courte ou plus longue, de sorte que, quelle que soit la position de l'élément mobile 30 sur le rail 28, son orifice de passage 26 est en regard de l'ouverture oblongue 34.

Par exemple, l'ouverture oblongue de passage 34 s'étend entre les rainures 32 du rail 28.

On notera que l'on peut prévoir une variante de réalisation où l'organe longitudinal de fixation 24 ne comporterait que l'ouverture oblongue de passage 34 (et serait donc dépourvu de rail 28 et d'éléments mobiles 30). Dans ce cas, cette ouverture oblongue de passage 34 remplit la fonction d'orifice de passage, les éléments de fixation 16 coopérant avec les bords de cette ouverture oblongue de passage 34. Cependant, l'utilisation des éléments mobiles 30 pour recevoir les éléments de fixation 16 permet une fixation plus robuste et plus fiable qu'une fixation avec une simple ouverture oblongue de passage.

La fixation d'un siège 10 grâce au dispositif de fixation 22 du premier mode de réalisation va maintenant être décrite.

Les inserts 14 sont préalablement insérés dans le plancher 12, à des endroits prédéfinis.

Dans le cadre d'un véhicule ferroviaire, les sièges peuvent généralement être agencés en deux configurations possibles, dites de première classe (dans laquelle les sièges sont relativement larges et espacés les uns des autres) ou de seconde classe (dans laquelle les sièges sont plus étroits et rapprochés).

Chaque insert 14 est alors disposé dans le plancher 12, à un endroit permettant à la fois sa fixation à un siège de première classe ou à un siège de seconde classe, en fonction de la configuration choisie.

En variante, le plancher 12 peut être équipé d'un premier jeu de premiers inserts 14, et un second jeu de seconds inserts 14, le véhicule comprenant une pluralité de sièges, agencés selon une première configuration en étant fixés aux premiers inserts, ou selon une seconde configuration en étant fixés aux seconds inserts.

Le siège 10 est apporté en une position choisie, en fonction de la configuration (première ou deuxième classe) choisie. Dans cette position choisie, l'ouverture oblongue 34 est en regard de l'insert 14.

On notera ainsi que cette ouverture oblongue 34 définit le segment continu formé par la pluralité de positions possibles entre le siège 10 et l'insert 14 : le siège 10 peut être disposé dans n'importe quelle position tant que l'ouverture oblongue 34 est en regard de l'insert 14.

Une fois le siège 10 dans la position souhaitée, l'élément mobile 30 est agencé sur le rail 28 pour disposer son orifice de passage 26 en regard de l'insert 14. Le rail 28 étant continu, l'élément mobile 30 peut être disposé à n'importe quelle position le long de ce rail 28.

L'élément de fixation 16 est alors passé au travers de l'orifice de passage 26 et de l'ouverture oblongue 34 pour atteindre l'insert 14 auquel il est fixé, par exemple par vissage.

L'organe longitudinal 24 se retrouve ainsi fermement fixé à l'insert 14.

Avantageusement, un second insert 14 est également en regard de l'ouverture oblongue 34, si bien que le dispositif de fixation 22 y est également fixé au moyen d'un second élément mobile 30.

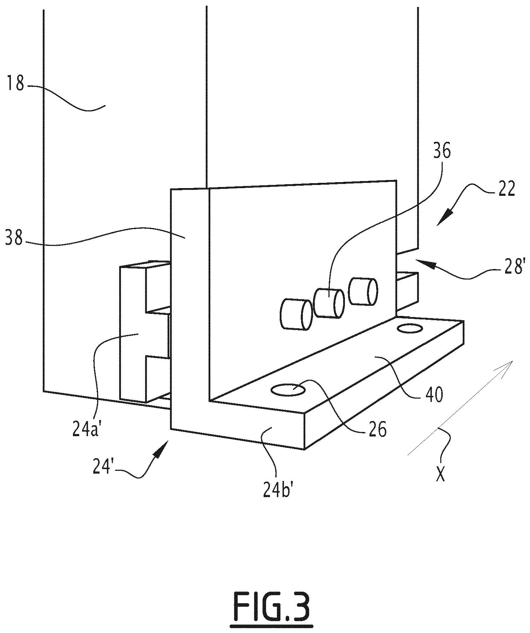

Un dispositif de fixation 22 selon un second exemple de mode de réalisation est représenté sur la figure 3. Sur cette figure, les éléments analogues à ceux des figures précédentes sont désignés par des références identiques.

Conformément à ce second mode de réalisation, un rail 28' est ménagé dans le montant 18, à proximité d'une extrémité inférieure du montant 18. Ce rail 28' s'étend dans la direction longitudinale X, et il est ménagé sur une paroi latérale du montant 18. Le rail 28' forme une rainure en T.

Le dispositif de fixation 22 comporte un organe longitudinal de fixation 24' en deux parties, à savoir une première partie de guidage 24a' coopérant avec le rail 28' et mobile le long de ce rail 28', et une seconde partie de fixation 24b' solidaire de la première partie de guidage 24a' et comprenant l'au moins un orifice de passage 26.

La première partie de guidage 24a' est disposée dans le rail 28', et elle est mobile le long de ce rail 28'. Comme cela est visible sur la figure 3, la première partie de guidage 24a' présente par exemple une section transversale en T, sensiblement complémentaire de la forme du rail 28', dont les branches latérales coopèrent avec des rebords du rail 28' pour maintenir la première partie de guidage 24a' dans le rail 28', et dont la branche centrale s'étend hors du rail 28', entre les rebords du rail 28'.

Avantageusement, le dispositif de fixation comporte des moyens de verrouillage de la première partie de guidage 24a' dans une position longitudinale choisie le long du rail 28'. Ces moyens de verrouillage peuvent être de tout type envisageable.

La seconde partie de fixation 24b' est agencée en dehors du rail 28', en étant solidarisée à la première partie de guidage 24a', et plus particulièrement à sa branche centrale, pour se déplacer avec cette première partie de guidage 24a' le long du rail.

Dans l'exemple décrit, la première partie de guidage 24a' comporte des plots de solidarisation 36 coopérant avec des orifices complémentaires ménagés sur la seconde partie de fixation 24b'. Il est toutefois à noter que tout autre moyen de solidarisation est envisageable. Les première 24a' et seconde 24b' parties pourraient aussi en variante être venues de matière.

La seconde partie de fixation 24b' présente une section transversale en L, définie par une paroi verticale 38 solidarisée avec la première partie de guidage 24a', et une paroi horizontale 40 comprenant au moins un orifice de passage 26, par exemple deux orifices de passage 26 espacés dans la direction longitudinale X. L'espacement entre ces deux orifices de passage 26 est le même que l'espacement entre deux inserts 14 du plancher 12.

La fixation d'un siège 10 grâce au dispositif de fixation 22 du second mode de réalisation va maintenant être décrite.

Les inserts 14 sont, comme décrit précédemment, préalablement insérés dans le plancher 12, à des endroits prédéfinis. Le siège 10 est disposé à une position souhaitée, en fonction de la configuration de sièges souhaitée (première ou seconde classe).

L'organe longitudinal 24' est alors coulissé le long du rail 28' jusqu'à faire coïncider le ou les orifices de passage 26 avec le ou les inserts 14 correspondants. Il reste alors à fixer la seconde partie de fixation 24b' à chaque insert 14, au moyen d'un élément de fixation 16 passant au travers de l'orifice de passage 26 correspondant et coopérant avec l'insert 14, par exemple par vissage.

On notera que le rail 28' définit le segment continu formé par la pluralité de positions possibles entre le siège 10 et l'insert 14 : le siège 10 peut être disposé dans n'importe quelle position tant que l'organe longitudinal 24' peut être coulissé dans le rail jusqu'à ce que chaque orifice de passage 26 soit en regard de l'insert 14 correspondant.

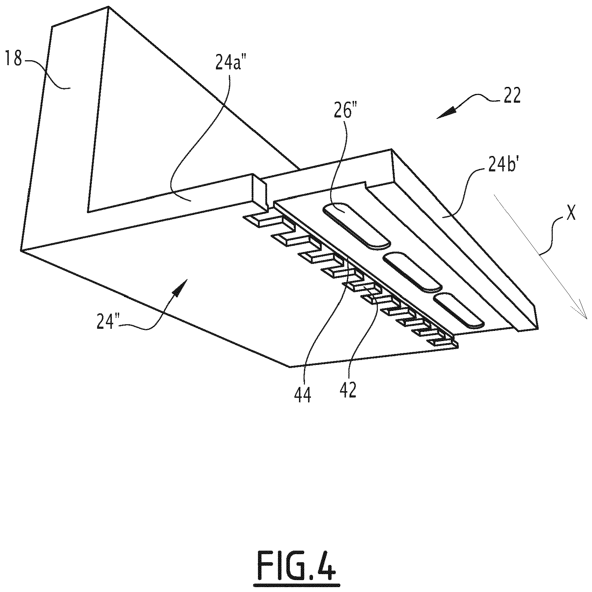

Un dispositif de fixation 22 selon un troisième exemple de mode de réalisation est représenté sur la figure 4. Sur cette figure, les éléments analogues à ceux des figures précédentes sont désignés par des références identiques.

Conformément à ce troisième mode de réalisation, l'organe longitudinal de fixation 24" comporte une première partie 24a" solidarisée au montant de siège 18, et une seconde partie 24b" comprenant l'au moins un orifice de passage 26".

La première partie 24a" est par exemple venue de matière avec le montant 18.

La seconde partie 24b" est susceptible d'être assemblée à la première partie 24a" en plusieurs positions possibles.

A cet effet, la première partie 24a" comporte un premier bord crénelé 42, et la seconde partie 24b" comporte un second bord crénelé 44 complémentaire du premier bord crénelé 42, assemblable avec ce premier bord crénelé 42 dans une pluralité de positions possibles dans la direction longitudinale X.

Il est toutefois à noter qu'un tel positionnement relatif au moyen de bords crénelés 42, 44 (aussi appelés peignes) ne permet de définir que des positions relatives de manière discrète (en fonction des créneaux) et non pas de manière continue.

Ainsi, pour définir un segment continu de positions possibles entre le montant 18 et les inserts 14, chaque orifice de passage 26" présente une forme oblongue allongée dans la direction longitudinale X. Dans l'exemple décrit, la seconde partie 24b" comporte trois orifices de passage 26" oblongs, mais il pourrait en variante n'en comporter qu'un sur sensiblement toute sa longueur, ou deux, ou davantage, tant que l'ensemble des orifices de passage oblongs 26" s'étend sur sensiblement toute la longueur de la seconde partie 24b".

La fixation d'un siège 10 grâce au dispositif de fixation 22 du troisième mode de réalisation va maintenant être décrite.

Les inserts 14 sont, comme décrit précédemment, préalablement insérés dans le plancher 12, à des endroits prédéfinis. Le siège 10 est disposé à une position souhaitée, en fonction de la configuration de sièges souhaitée (première ou seconde classe).

La seconde partie 26b" est alors assemblée à la première partie 24a", de sorte que l'un des orifices de passage oblong 26" se trouve en regard d'un insert 14 correspondant.

Il reste alors à fixer la seconde partie 24b" à chaque insert 14, au moyen d'un élément de fixation 16 passant au travers de l'orifice de passage 26" correspondant et coopérant avec l'insert 14, par exemple par vissage.

On notera que, dans ce mode de réalisation, le segment continu formé par la pluralité de positions possibles entre le siège 10 et l'insert 14 est formé par les différentes positions relatives des première 24a" et seconde 24b" parties, en combinaison avec la forme oblongue des orifices de passage 26".

Il apparait clairement que l'invention permet de fixer le siège 10 selon une pluralité de positions possibles s'étendant de manière continue le long d'un segment, sans nécessiter de rail agencé sur le plancher 12. Il en résulte que le plancher 12 ne nécessite pas de capot de dissimulation de rail, si bien que le plancher 12 ne comporte aucune partie en saillie.

## Revendications

1. Dispositif (22) de fixation de siège (10) de véhicule, notamment de véhicule ferroviaire, sur un plancher (12) du véhicule, comportant :
- au moins un insert (14) destiné à être inséré dans le plancher (12), et au moins un élément de fixation (16) complémentaire de l'insert (14),
- un organe longitudinal de fixation (24 ; 24' ; 24"), solidaire d'un montant (18) du siège (10), s'étendant dans une direction longitudinale (X), comportant au moins un orifice de passage (26 ; 26") destiné à être traversé par l'un respectif parmi l'au moins un élément de fixation (16), l'organe longitudinal de fixation (24 ; 24' ; 24") étant conformé pour recevoir l'élément de fixation (16) en une pluralité de positions possibles dans la direction longitudinale (X) par rapport au montant (18) du siège (10), la pluralité de positions possibles formant un segment continu s'étendant dans la direction longitudinale (X),
**caractérisé en ce que**, dans chaque position possible, l'orifice de passage (26, 26") coïncide avec l'insert (14) pour permettre la fixation, l'élément de fixation (16) traversant l'orifice de passage (26 ;26") pour atteindre et/ou coopérer avec l'insert (14).

2. Dispositif de fixation (22) selon la revendication 1, dans lequel l'organe longitudinal de fixation (24 ; 24') comporte un rail (28 ; 28') s'étendant dans la direction longitudinale (X), et au moins un élément (30 ; 24') mobile le long du rail, chaque élément mobile (30 ; 24') comportant l'un respectif parmi l'au moins un orifice de passage (26).

3. Dispositif de fixation (22) selon la revendication 2, dans lequel l'organe longitudinal de fixation (24) est formé par un pied du montant (18) de siège (10), ledit pied étant destiné à s'étendre parallèlement au sol, et le rail (28) est formé par au moins une rainure (32) s'étendant dans la direction longitudinale (X), ménagée sur ledit pied.

4. Dispositif de fixation (22) selon la revendication 3, comportant une ouverture oblongue de passage (34), s'étendant parallèlement au rail (28), l'orifice de passage (26) de chaque élément mobile (30) étant agencé en regard de l'ouverture oblongue de passage (34), de sorte que chaque élément de fixation (16) passe à la fois par l'orifice de passage (26) correspondant et par l'ouverture oblongue de passage (34).

5. Dispositif de fixation (22) selon la revendication 3 ou 4, dans lequel le rail (28) comporte deux rainures (32) parallèles entre elles, l'élément mobile (30) présentant une section transversale en forme générale de U, comprenant deux branche coopérant chacune avec l'une respective des rainures (32), et une partie centrale comprenant l'orifice de passage (26).

6. Dispositif de fixation (22) selon la revendication 2, dans lequel le rail (28') est ménagé dans le montant (18) de siège (10), l'organe longitudinal de fixation (24') comportant une première partie de guidage (24a') coopérant avec le rail (28') et mobile le long de ce rail (28'), et une seconde partie de fixation (24b') solidaire de la première partie de guidage (24a') et comprenant l'au moins un orifice de passage (26), le dispositif de verrouillage comportant de préférence des moyens de verrouillage de la première partie de guidage (24a') dans une position longitudinale choisie le long du rail (28').

7. Dispositif de fixation (22) selon la revendication 1, dans lequel l'organe longitudinal de fixation (24") comporte une première partie (24a") solidarisée au montant (18) de siège, et une seconde partie (24b") comprenant l'au moins un orifice de passage (26"), la seconde partie (24b") étant susceptible d'être assemblée à la première partie (24a") en plusieurs positions possibles, chaque orifice de passage (26") présentant de préférence une forme oblongue allongée dans la direction longitudinale (X).

8. Dispositif de fixation (22) selon la revendication 7, dans lequel la première partie (24a") comporte un premier bord crénelé (42), et la seconde partie (24b") comporte un second bord crénelé (44) complémentaire du premier bord crénelé (42), assemblable avec ce premier bord crénelé (42) dans une pluralité de positions possibles dans la direction longitudinale (X).

9. Siège de véhicule (10), notamment de véhicule ferroviaire, comportant un montant (18) destiné à être fixé à un plancher (12) du véhicule, **caractérisé en ce que** le montant (18) est muni d'un dispositif de fixation (22) selon l'une quelconque des revendications 1 à 8.

10. Véhicule, notamment véhicule ferroviaire, comportant un plancher (12), **caractérisé en ce que** le plancher (12) comporte au moins un insert (14), le véhicule comportant au moins un siège (10) selon la revendication 9, fixé au plancher (12) au moyen de l'insert (14).

## Patentansprüche

1. Vorrichtung (22) zur Befestigung eines Sitzes (10) eines Fahrzeugs, insbesondere eines Schienenfahrzeugs, auf einem Boden (12) des Fahrzeugs, umfassend:
- mindestens einen Einsatz (14), der dazu bestimmt ist, in den Boden (12) eingesetzt zu werden, und mindestens ein Befestigungselement (16), das komplementär zu dem Einsatz (14) ist,
- ein Längsbefestigungsorgan (24; 24'; 24"), das fest mit einer Säule (18) des Sitzes (10) verbunden ist, sich in einer Längsrichtung (X) erstreckt, umfassend mindestens eine Durchgangsöffnung (26; 26"), die dazu bestimmt ist, von einem jeweiligen des mindestens einen Befestigungselements (16) durchquert zu werden, wobei das Längsbefestigungsorgan (24; 24'; 24") geformt ist, um das Befestigungselement (16) an einer Vielzahl von möglichen Positionen in der Längsrichtung (X) in Bezug auf die Säule (18) des Sitzes (10) aufzunehmen, wobei die Vielzahl von möglichen Positionen ein durchgehendes Segment bildet, das sich in der Längsrichtung (X) erstreckt, **dadurch gekennzeichnet, dass** die Durchgangsöffnung (26, 26") an jeder möglichen Position
mit dem Einsatz (14) übereinstimmt, um eine Befestigung zu ermöglichen, wobei das Befestigungselement (16) die Durchgangsöffnung (26; 26") durchquert, um den Einsatz (14) zu erreichen und/oder damit zusammenzuwirken.

2. Befestigungsvorrichtung (22) nach Anspruch 1, wobei das Längsbefestigungsorgan (24; 24') eine Schiene (28; 28'), die sich in der Längsrichtung (X) erstreckt, und mindestens ein Element (30; 24') umfasst, das entlang der Schiene beweglich ist, umfasst, wobei jedes bewegliche Element (30; 24') eine jeweilige der mindestens einen Durchgangsöffnung (26) umfasst.

3. Befestigungsvorrichtung (22) nach Anspruch 2, bei der das Längsbefestigungsorgan (24) durch einen Fuß der Säule (18) des Sitzes (10) gebildet ist, wobei der Fuß dazu bestimmt ist sich parallel zu dem Boden zu erstrecken, und die Schiene (28) durch mindestens eine sich in der Längsrichtung (X) erstreckende Nut (32) gebildet ist, die an dem Fuß ausgebildet ist.

4. Befestigungsvorrichtung (22) nach Anspruch 3, umfassend eine längliche Durchgangsöffnung (34), die sich parallel zu der Schiene (28) erstreckt, wobei die Durchgangsöffnung (26) von jedem beweglichen Element (30) gegenüber der länglichen Durchgangsöffnung (34) angeordnet ist, sodass jedes Befestigungselement (16) sowohl durch die entsprechende Durchgangsöffnung (26) als auch durch die längliche Durchgangsöffnung (34) verläuft.

5. Befestigungsvorrichtung (22) nach Anspruch 3 oder 4, wobei die Schiene (28) zwei zueinander parallele Nuten (32) aufweist, wobei das bewegliche Element (30) einen allgemein U-förmigen Querschnitt aufweist, der zwei Schenkel, die jeweils mit einer entsprechenden der Nuten (32) zusammenwirken, und einen Mittelteil umfasst, der die Durchgangsöffnung (26) umfasst.

6. Befestigungsvorrichtung (22) nach Anspruch 2, wobei die Schiene (28') in der Säule (18) des Sitzes (10) ausgebildet ist, das Längsbefestigungselement (24') einen ersten Führungsteil (24a'), der mit der Schiene (28') zusammenwirkt und entlang dieser Schiene (28') beweglich ist, und einen zweiten Befestigungsteil (24b') umfasst, der fest mit dem ersten Befestigungsteil (24a') verbunden ist, und umfassend die mindestens eine Durchgangsöffnung (26), wobei die Verriegelungsvorrichtung vorzugsweise Einrichtungen zum Verriegeln des ersten Führungsteils (24a') an einer ausgewählten Längsposition entlang der Schiene (28') umfasst.

7. Befestigungsvorrichtung (22) nach Anspruch 1, bei der das Längsbefestigungsorgan (24") einen ersten Teil (24a"), der fest mit der Säule (18) des Sitzes verbunden ist, und einen zweiten Teil (24b") umfasst, der die mindestens eine Durchgangsöffnung (26") umfasst, wobei der zweite Teil (24b") in mehreren möglichen Positionen mit dem ersten Teil (24a") verbunden werden kann, wobei jede Durchgangsöffnung (26") vorzugsweise eine längliche Form aufweist, die in der Längsrichtung (X) verlängert ist.

8. Befestigungsvorrichtung (22) nach Anspruch 7, wobei der erste Teil (24a") eine erste gezackte Kante (42) aufweist und der zweite Teil (24b") eine zweite gezackte Kante (44) aufweist, die komplementär zu der ersten gezackten Kante (42) ist und mit dieser ersten gezackten Kante (42) in einer Vielzahl von möglichen Positionen in der Längsrichtung (X) zusammengesetzt werden kann.

9. Fahrzeugsitz (10), insbesondere eines Schienenfahrzeugs, umfassend eine Säule (18), die dazu bestimmt ist, an einem Boden (12) des Fahrzeugs befestigt zu werden, **dadurch gekennzeichnet, dass** die Säule (18) mit einer Befestigungsvorrichtung (22) nach einem der Ansprüche 1 bis 8 versehen ist.

10. Fahrzeug, insbesondere Schienenfahrzeug, umfassend einen Boden (12), **dadurch gekennzeichnet, dass** der Boden (12) mindestens einen Einsatz (14) umfasst, wobei das Fahrzeug mindestens einen Sitz (10) nach Anspruch 9 aufweist, der mittels des Einsatzes (14) an dem Boden (12) befestigt ist.

## Claims

1. Device (22) for fixing a vehicle seat (10), in particular a rail vehicle seat, to a floor (12) of the vehicle, comprising:
- at least one insert (14) to be inserted into the floor (12), and at least one fixing element (16) in addition to the insert (14),
- a longitudinal fixing member (24; 24'; 24"), secured to an upright (18) of the seat (10), extending in a longitudinal direction (X), comprising at least one through orifice (26; 26") to be passed through by a respective one of the at least one fixing element (16), the longitudinal fixing member (24; 24'; 24") being shaped to receive the fixing element (16) in a plurality of possible positions in the longitudinal direction (X) with respect to the upright (18) of the seat (10), the plurality of possible positions forming a continuous segment extending in the longitudinal direction (X),
**characterized in that**, in each possible position, the through orifice (26,26") coincides with the insert (14) to allow fixing, the fixing element (16) passing through the through-hole (26; 26") to reach and/or cooperate with the insert (14).

2. Fixing device (22) according to claim 1, wherein the longitudinal fastening member (24; 24') comprises a rail (28; 28') extending in the longitudinal direction (X), and at least one element (30; 24') movable along the rail, each movable element (30; 24') comprising a respective one of the at least one through-hole (26).

3. Fixing device (22) according to claim 2, in which the longitudinal fixing member (24) is formed by a foot of the upright (18) of a seat (10), said foot being intended to extend parallel to the floor, and the rail (28) is formed by at least one groove (32) extending in the longitudinal direction (X), provided on said foot.

4. Fixing device (22) according to claim 3, comprising an oblong through opening (34) extending parallel to the rail (28), the through orifice (26) of each movable element (30) being arranged opposite the oblong through opening (34), so that each fastening element (16) passes both through the corresponding through orifice (26) and through the oblong through opening (34).

5. Fixing device (22) according to claim 3 or 4, in which the rail (28) comprises two grooves (32) parallel to each other, the movable element (30) having a generally U-shaped cross-section, comprising two arms each cooperating with a respective one of the grooves (32), and a central part comprising the through hole (26).

6. Fixing device (22) according to claim 2, in which the rail (28') is formed in the upright (18) of the seat (10), the longitudinal fastening member (24') comprising a first guide part (24a') cooperating with the rail (28') and movable along this rail (28'), and a second fastening part (24b') integral with the first guide part (24a') and comprising the at least one passage orifice (26), the locking device preferably comprising means for locking the first guide part (24a') in a chosen longitudinal position along the rail (28').

7. Fixing device (22) according to claim 1, in which the longitudinal fastening member (24") comprises a first part (24a") secured to the seat post (18), and a second part (24b") comprising the at least one through-hole (26"), the second part (24b") being capable of being assembled to the first part (24a") in a plurality of possible positions, each through-hole (26") preferably having an oblong shape elongated in the longitudinal direction (X).

8. Fixing device (22) according to claim 7, wherein the first part (24a") comprises a first serrated edge (42), and the second part (24b") comprises a second serrated edge (44) complementary to the first serrated edge (42), which can be assembled with this first serrated edge (42) in a plurality of possible positions in the longitudinal direction (X).

9. Vehicle seat (10), in particular for a rail vehicle, comprising an upright (18) intended to be fixed to a floor (12) of the vehicle, **characterised in that** the upright (18) is provided with a fixing device (22) according to any one of claims 1 to 8.

10. Vehicle, in particular rail vehicle, comprising a floor (12), **characterised in that** the floor (12) comprises at least one insert (14), the vehicle comprising at least one seat (10) according to claim 9, fixed to the floor (12) by means of the insert (14).
